# FASCICULE DE BREVET EUROPEEN

(11) **EP 2 188 160 B1**
(45) Date de publication et mention de la délivrance du brevet: **13.03.2019**
(21) Numéro de dépôt: 08786710.7
(22) Date de dépôt: 31.07.2008
(51) Int. Cl.: B60S 1/38, B60S 1/52

(54) **BALAI D'ESSUYAGE À PROJECTION DE LIQUIDE POUR VITRES DE VEHICULE**
FLÜSSIGKEITSSPRÜH-SCHEIBENWISCHER FÜR FAHRZEUGFENSTER
LIQUID-PROJECTING WIPER FOR VEHICLE WINDOWS

(30) Priorité: 10.09.2007 FR 0706336
(43) Date de publication de la demande: 26.05.2010
(60) Demande divisionnaire: 19155168.8
(73) Titulaire: Valeo Systèmes d'Essuyage, 78322 Le Mesnil Saint Denis (FR)
(72) Inventeur: JARASSON, Jean-Michel, F-78320 Le Mesnil St. Denis (FR); CAILLOT, Gérald, F-78720 Cernay la Ville (FR); IZABEL, Vincent, F-91380 Chilly Mazarin (FR)
(86) Numéro de dépôt international: PCT/EP2008/060088
(87) Numéro de publication internationale: WO 2009/033885

(56) Documents cités:
- DE-A1- 10 000 373
- DE-A1-102004 056 835
- US-B1- 6 470 527

## Description

La présente invention concerne un balai d'essuyage pour vitres de véhicule.

Elle concerne également un dispositif d'essuyage comprenant un balai d'essuyage tel que décrit dans la présente invention.

Il existe aujourd'hui une technologie de balais d'essuyage pour vitres de véhicule connue sous le nom de « balai plat » (ou « Flat Blade » en anglo-saxon) et dont un exemple de réalisation est décrit dans la demande internationale n° WO2007/000346.

Cette technologie « balai plat » consiste en une structure construite autour d'une pièce longitudinale monobloc constituée de deux parties fonctionnellement distinctes.

Une première partie est un support en matériau plastique semi-rigide comportant, d'une part, une cavité dans laquelle est logée une tige de rigidification généralement métallique, appelée également « vertèbre », et, d'autre part, une griffe portant la lame d'essuyage en élastomère.

Une deuxième partie de ladite pièce longitudinale monobloc est un accessoire destiné à améliorer l'efficacité et la qualité de l'essuyage. La demande internationale précitée montre comme exemple d'accessoire un dispositif de distribution/projection d'un liquide de lavage approprié qui permet, par action conjuguée avec le mouvement de balayage de la lame d'essuyage, d'éliminer certaines particules solides pouvant se fixer sur les vitres, comme les projections de boue ou les résidus d'insectes écrasés contre le pare-brise. Ledit dispositif de distribution/projection de liquide peut comporter un ou plusieurs canaux de transport de liquide munis de trous latéraux à travers lesquels le liquide de lavage est projeté contre les vitres du véhicule.

La demande internationale n° WO2007/000346 illustre plus particulièrement un balai d'essuyage relevant de la technologie « balai plat » dont le dispositif de distribution/projection de liquide est combiné à un déflecteur aérodynamique qui utilise le vent relatif du véhicule pour augmenter la force de contact de la lame d'essuyage contre la vitre à essuyer. La pièce longitudinale complexe intégrant les fonctions de support et au moins de dispositif de distribution/projection de liquide est obtenue par coextrusion d'au moins deux matériaux. Un premier matériau est un matériau plastique semi-rigide présentant un flexibilité longitudinale, destiné à réaliser la fonction de support proprement dite, tandis qu'au moins un autre matériau, comme un élastomère, est utilisé pour réaliser au moins la fonction de projection de liquide.

On connaît également de la demande de brevet européen n° 1 209 050 un balai d'essuyage pour vitres de véhicules constitué par une structure du type « balai plat » prévue pour porter une lame d'essuyage en élastomère. Un dispositif de distribution/projection de liquide de lavage à canaux de transport latéraux est intégré à la lame d'essuyage, de sorte que l'ensemble de ces deux éléments forme une pièce unique obtenue par extrusion d'un même élastomère.

Cependant, aucun des documents de l'état de la technique mentionnés ci-dessus ne décrit de moyens aptes à produire la projection de liquide recherchée à travers les ouvertures pratiquées le long du ou des canaux de transport. DE 100 00 373 A1 divulgue de tels moyens.

L'invention propose un balai d'essuyage pour vitres de véhicule, selon la revendication 1.

Ainsi, on comprend que les moyens d'obturation situés sur l'embout d'extrémité produisent une surpression du liquide contenu dans le canal de transport propre à forcer le passage du liquide à travers les trous latéraux du canal.

Ledit canal de transport peut être coextrudé avec le support longitudinal du balai ou constituer des pièces séparées fixées directement sur ledit support par divers moyens comme par clippage, assemblage en queue d'aronde, etc.

On peut aussi envisager, comme dans la demande de brevet européen n° 1 209 050, que le ou les canaux de transport soient intégrés à la lame d'essuyage ou encore que ledit canal de transport soit combiné à un déflecteur aérodynamique dudit balai d'essuyage. Dans ce dernier cas, deux alternatives sont possibles.

Selon une première alternative, ledit canal de transport est réalisé à l'intérieur d'un profilé constituant ledit déflecteur aérodynamique, avec l'avantage d'un encombrement minimum pour le dispositif de distribution/projection qui se trouve alors intégré dans la géométrie du déflecteur.

Selon une deuxième alternative, ledit canal de transport constitue une extension dudit déflecteur aérodynamique, avec l'avantage de permettre une projection de liquide au plus près des vitres du véhicule.

Dans un premier mode de réalisation, lesdits moyens d'obturation sont constitués par un bouchon apte à être inséré à l'intérieur dudit canal de transport de liquide.

Dans un deuxième mode de réalisation, lesdits moyens d'obturation sont constitués par des moyens d'écrasement dudit canal de transport de liquide.

Selon un premier mode de mise en oeuvre, lesdits moyens d'écrasement comprennent un élément d'écrasement mobile, apte à être amené d'une position ouverte à une position d'obturation, et des moyens de retenue aptes à immobiliser ledit élément d'écrasement en position d'obturation.

Selon un deuxième mode de mise en oeuvre, lesdits moyens d'écrasement sont constitués par une rainure latérale ménagée à l'intérieur dudit embout.

Comme on le verra en détail plus loin, l'embout comportant lesdits moyens d'obturation peut être associé à un embout de transfert disposé à une seconde extrémité de la structure et comportant des moyens de raccordement dudit canal de transport à un second canal de transport. Dans cette réalisation, l'invention prévoit que ledit embout comporte en outre des moyens d'alimentation en liquide dudit dispositif de distribution/projection de liquide. On obtient alors un dispositif de distribution/projection de liquide à deux canaux de transport, comportant à une extrémité un embout de transfert raccordant les deux canaux entre eux, et à une autre extrémité un embout servant à la fois à obturer les canaux et les alimenter en liquide.

L'alimentation en liquide peut être également réalisée au moyen d'un orifice central d'alimentation en liquide d'au moins un canal de transport. Dans un exemple de réalisation, ledit orifice central d'alimentation est porté par un connecteur central, apte à relier le balai d'essuyage à un mécanisme d'entraînement.

La description qui va suivre en regard des dessins annexés, donnés à titre d'exemples non limitatifs, fera bien comprendre en quoi consiste l'invention et comment elle peut être réalisée.
La figure 1a est une vue en perspective d'un balai d'essuyage conforme à l'invention.
La figure 1b est une vue en coupe partielle du balai de la figure 1a.
La figure 1c est une vue en perspective montrant l'assemblage du balai des figures 1a et 1b.
La figure 2a est une vue en perspective d'une première variante du dispositif de distribution/projection montré sur les figures 1a à 1c.
La figure 2b est une vue en perspective d'une deuxième variante du dispositif de distribution/projection montré sur les figures 1a à 1c.
La figure 3 est une vue en perspective montrant l'assemblage d'un balai d'essuyage comprenant le dispositif de distribution/projection montré sur la figure 2a.
La figure 4a est une vue en perspective d'un embout d'extrémité conforme à l'invention.
La figure 4b est une vue de dessus en coupe de l'embout de la figure 4a.
La figure 5a est une vue en perspective d'un embout de transfert selon un mode de réalisation de l'invention.
La figure 5b est une vue de dessus en coupe de l'embout de transfert de la figure 5a.
La figure 6a est une vue en perspective d'un balai d'essuyage avec les moyens d'écrasement en position ouverte.
La figure 6b est une vue en perspective du balai d'essuyage de la figure 6a en position d'obturation des moyens d'écrasement.
La figure 7 est une vue en perspective d'un connecteur central de raccordement d'un balai d'essuyage à deux segments d'accessoire.

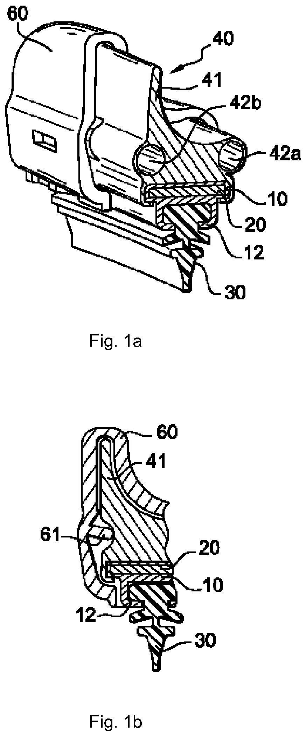

Sur la figure 1a est représenté en perspective un balai d'essuyage pour vitres de véhicules réalisé selon la technologie « balai plat » (« Flat Blade »). La structure de ce balai comprend un support longitudinal 10 en matériau plastique semi-rigide extrudé comportant une cavité destinée à loger une tige métallique 20 de rigidification, ou « vertèbre », de forme plane s'étendant sensiblement sur toute la longueur de la structure du balai d'essuyage. Le support 10 comporte également une griffe longitudinale 12 dans laquelle est introduite une lame 30 d'essuyage en élastomère.

Comme le montre la figure 1a, sur le support longitudinal 10 est assemblé et fixé un accessoire 40 réalisé par extrusion indépendamment du support 10. Dans l'exemple de la figure 1a, l'accessoire 40 comprend un déflecteur aérodynamique 41 auquel est combiné un dispositif de distribution/projection de fluide constitué de deux canaux latéraux 42a, 42b de transport de liquide percés de trous, non représentés, afin de permettre la projection d'un liquide de lavage, par exemple, sur une vitre du véhicule.

L'accessoire 40 de la figure 1a est constitué d'un seul matériau, ici un élastomère extrudé, le dispositif de distribution/projection de liquide se présentant comme une extension latérale du déflecteur aérodynamique 41.

L'accessoire 40, situé au-dessus du support 10, présente des flancs 43a, 43b de l'accessoire, portant les canaux 42a, 42b de transport de liquide, lesdits flancs enserrant le support 10.

Bien entendu, il n'est pas nécessaire que le dispositif de distribution/projection de liquide soit combiné à un déflecteur aérodynamique 41, l'invention pouvant être parfaitement mise en oeuvre avec un accessoire 40 constitué du seul dispositif de distribution/projection. Il faut seulement rappeler que la présence d'un déflecteur aérodynamique se justifie pour des balais d'essuyage de vitres avant, mais ne présente que peu d'intérêt pour les vitres arrière.

De même, si les modes de réalisation à canaux de transport latéraux décrits ici impliquent tous un dispositif de distribution/projection à deux canaux 42a, 42b de transport, il doit être compris que ce choix n'est nullement limitatif, l'enseignement de l'invention pouvant s'appliquer à un dispositif de distribution/projection ne comportant qu'un seul canal de transport latéral.

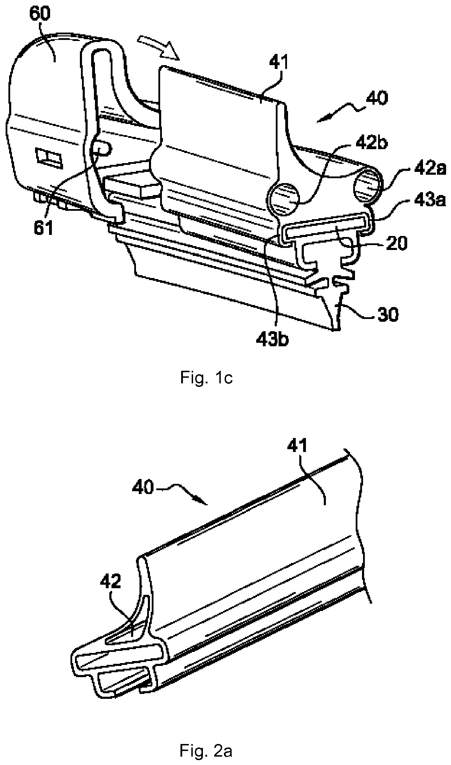

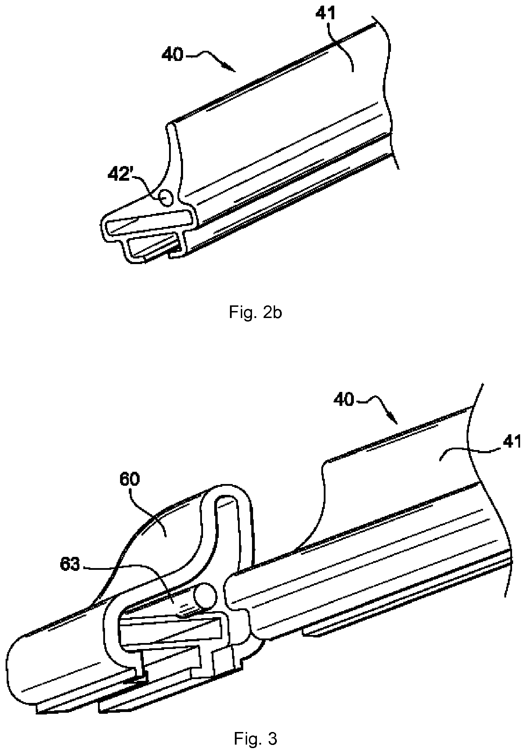

Dans le cadre de la combinaison d'un dispositif de distribution/projection de liquide avec un déflecteur aérodynamique, il convient de mentionner les variantes des figures 2a, 2b dans lesquelles le dispositif de distribution/projection ne se présente pas comme une extension latérale du déflecteur, comme dans le cas illustré sur les figures 1a à 1c, mais est réalisé par un canal unique ménagé à l'intérieur du profilé constituant le déflecteur 41. Cette disposition a l'avantage de ne pas augmenter l'encombrement total de l'accessoire 40. Sur l'exemple de la figure 2a, le canal 42 de transport est réalisé avec un profil à épaisseur extérieure constante, favorable pour des questions de process. Sur l'exemple de la figure 2b, le canal 42' de transport a une section cylindrique, plus facile à raccorder à des tubes ou tuyaux classiques.

Comme on peut le voir sur les figures 1a à 1c, le balai d'essuyage représenté comprend un embout 60 disposé à une extrémité de la structure et comportant des moyens d'obturation des canaux 42a, 42b de transport. Ces moyens d'obturation sont, dans cet exemple, des moyens d'écrasement constitués par une rainure latérale 61 ménagée à l'intérieur de l'embout 60. La figure 1c montre ledit embout 60 en phase d'introduction par coulissement sur l'extrémité de la structure. En position finale, telle que représentée sur les figures 1a et 1b, la rainure latérale 61 est disposée de manière à écraser et ainsi obturer les canaux 42a, 42b.

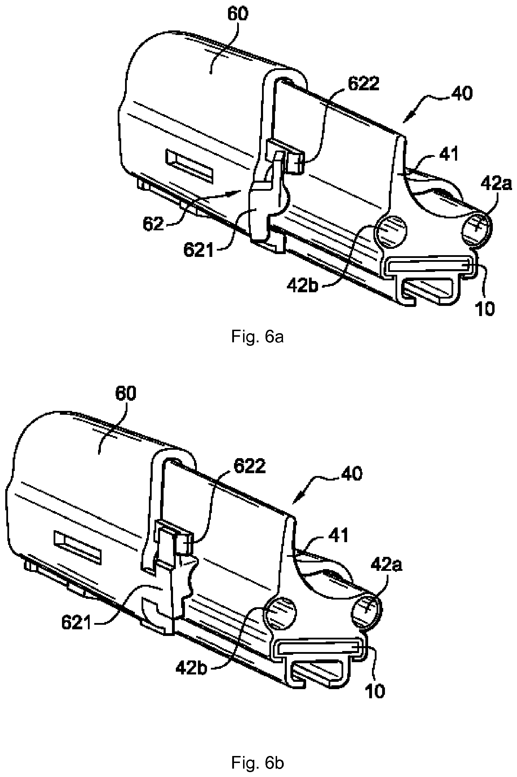

Un autre exemple d'obturation par écrasement est illustré sur les figures 6a, 6b. Les moyens d'écrasement des canaux 42a, 42b de transport sont constitués ici par un dispositif 62 d'écrasement comportant un élément mobile 621 monté à charnière sur l'embout 60 d'extrémité et un élément fixe 622 de retenue ménagé sur l'embout. Sur la figure 6a, l'élément mobile 621 d'écrasement est en position ouverte, le canal 42a n'étant pas obturé. Par fermeture de la charnière, l'élément mobile 621 est amené dans la position d'obturation de la figure 6b où le canal 42b est écrasé au niveau d'un profil d'écrasement approprié donné à l'élément mobile 621. L'élément mobile 621 est maintenu en position d'obturation par clippage sur l'élément fixe de retenue 622.

Un autre mode d'obturation des canaux de transport de liquide est montré à la figure 3. Il s'agit d'une obturation réalisée au moyen d'un bouchon 63 disposé dans l'embout 60 et apte à être inséré dans un canal de transport constitué à l'intérieur du profil d'un déflecteur aérodynamique 41. Dans l'exemple de la figure 3, le bouchon 63 est de section cylindrique et destiné à coopérer avec le canal 42' de transport de la figure 2b. De manière analogue, le canal 42 de la figure 2a pourrait être obturé par un bouchon dont la section serait conjuguée de celle du canal.

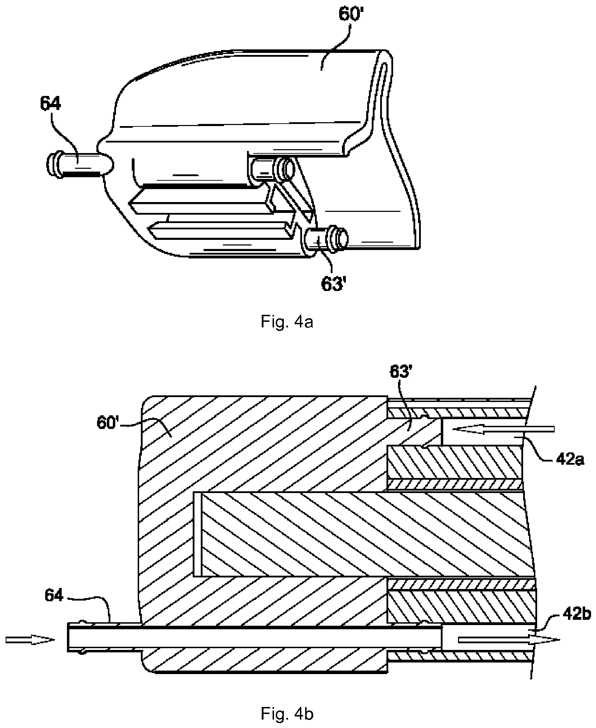

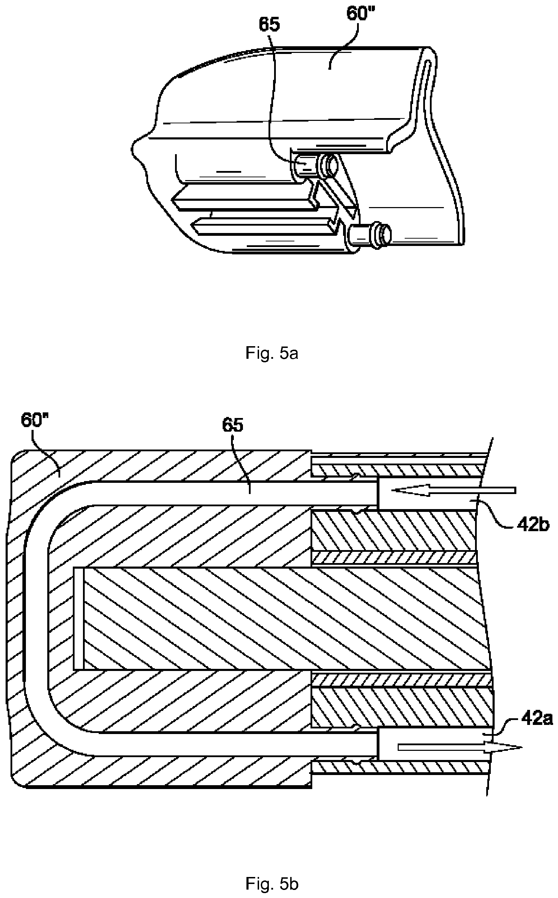

Sur les figures 4a, 4b est représenté un embout 60' d'extrémité comportant, d'une part, un bouchon 63' pour un canal 42a du dispositif de distribution/projection et, d'autre part, des moyens d'alimentation en liquide dudit dispositif constitués dans cet exemple par une canule 64 connecté à un second canal 42b de transport. Ainsi, les fonctions d'alimentation en liquide et d'obturation de canal sont réalisées simultanément par l'embout 60' disposé à une extrémité de la structure d'essuyage. A l'autre extrémité de la structure peut être disposé un autre embout 60", dit de transfert, tel que celui illustré aux figures 5a, 5b, comportant des moyens de raccordement du canal 42a au canal 42b, ces moyens de raccordement étant ici constitués par une lumière tubulaire 65 pratiquée dans l'embout 60" de transfert.

Une autre configuration possible de dispositif de distribution/projection de liquide, non représentée sur les figures, serait composée, à une première extrémité de la structure d'essuyage, d'un premier embout comportant des moyens d'obturation des deux canaux 42a, 42b et, à une deuxième extrémité, d'un deuxième embout comportant deux canules destinées à alimenter en liquide chaque canal 42a, 42b de transport.

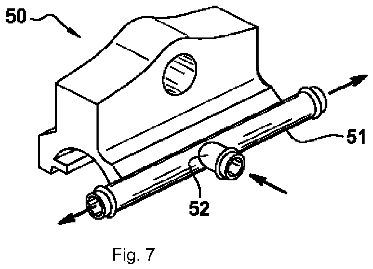

Selon un mode de réalisation particulier, le balai d'essuyage peut comporter un connecteur central disposé sur le support 10 sensiblement au milieu de la structure, le dispositif de distribution/projection de liquide étant constitué de deux segments placés sur le support 10 de part et d'autre du connecteur central. Ce connecteur central est, d'une manière générale, destiné à relier la structure au mécanisme d'entraînement en balayage du balai d'essuyage. Un tel connecteur central 50 est montré sur la figure 7. Afin d'assurer la continuité de circulation de fluide entre les deux segments, le connecteur 50 comporte un tube rigide 51 apte à être inséré dans les canaux de transport de chaque segment. Un tube rigide peut, bien entendu, être prévu de chaque côté du connecteur 50 dans le cas où le dispositif de distribution/projection est constitué deux canaux de transport latéraux. De plus, comme le montre la figure 7, le connecteur 50 peut être utilisé pour alimenter en liquide le dispositif de distribution/projection. A cet effet, le connecteur 50 comporte un orifice central 52 d'alimentation débouchant dans le tube rigide 51.

Le balai d'essuyage peut alors présenter, à une extrémité, un embout de bouchage des canaux de transport et, à une autre extrémité, un embout de transfert. Si un orifice d'alimentation est prévu sur chaque canal de transport, alors le balai peut comporter à chaque extrémité un embout de bouchage des canaux.

## Revendications

1. Balai d'essuyage pour une surface vitrée de véhicule, comprenant une structure destinée à recevoir une lame (30) d'essuyage, et un dispositif de distribution/projection de liquide comportant au moins un canal (42 ; 42' ; 42a, 42b) de transport de liquide, ledit balai comprenant au moins un embout (60 ; 60') disposé à une extrémité de ladite structure et comportant des moyens (61 ; 63 ; 621,622) d'obturation dudit canal de transport, **caractérisé en ce que** ledit embout (60') comporte en outre des moyens (64) d'alimentation en liquide dudit dispositif de distribution/projection de liquide.

2. Balai selon la revendication 1, dans lequel ledit canal (42 ; 42' ; 42a, 42b) de transport est combiné à un déflecteur aérodynamique (41) dudit balai d'essuyage.

3. Balai selon la revendication 2, dans lequel ledit canal (42 ; 42') de transport est réalisé à l'intérieur d'un profilé constituant ledit déflecteur aérodynamique (41).

4. Balai selon la revendication 2, dans lequel ledit canal (42a, 42b) de transport constitue une extension dudit déflecteur aérodynamique (41).

5. Balai selon l'une quelconque des revendications 1 à 4, dans lequel lesdits moyens d'obturation sont constitués par un bouchon (63) apte à être inséré à l'intérieur dudit canal (42') de transport de liquide.

6. Balai selon l'une quelconque des revendications 1 à 4, dans lequel lesdits moyens d'obturation sont constitués par des moyens d'écrasement dudit canal de transport de liquide.

7. Balai selon la revendication 6, dans lequel lesdits moyens d'écrasement comprennent un élément (621) d'écrasement mobile, apte à être amené d'une position ouverte à une position d'obturation, et par des moyens (622) de retenue aptes à immobiliser ledit élément (621) d'écrasement en position d'obturation.

8. Balai selon la revendication 6, dans lequel lesdits moyens d'écrasement sont constitués par une rainure latérale (61) ménagée à l'intérieur dudit embout (60).

9. Balai selon l'une quelconque des revendications 1 à 8, comprenant un embout (60") de transfert disposé à une seconde extrémité de la structure et comportant des moyens (65) de raccordement dudit canal de transport à un second canal de transport.

10. Balai selon l'une quelconque des revendications 1 à 9, dans lequel lesdits moyens d'alimentation sont constitués par une canule (64) connectée à un second canal de transport de liquide.

## Patentansprüche

1. Wischerblatt für eine Glasfläche eines Fahrzeugs, das eine Struktur, die dazu bestimmt ist, eine Wischlippe (30) aufzunehmen, und eine Flüssigkeitsverteil-/-sprühvorrichtung, die mindestens einen Flüssigkeitstransportkanal (42; 42'; 42a, 42b) umfasst, beinhaltet, wobei das Blatt mindestens ein Endstück (60; 60') beinhaltet, das an einem Ende der Struktur angeordnet ist und Mittel (61; 63; 621, 622) zum Verschließen des Transportkanals umfasst, **dadurch gekennzeichnet, dass** das Endstück (60') unter anderem Mittel (64) zur Zuführung von Flüssigkeit zur Flüssigkeitsverteil-/-sprühvorrichtung umfasst.

2. Blatt nach Anspruch 1, wobei der Transportkanal (42; 42'; 42a, 42b) mit einem aerodynamischen Leitblech (41) des Wischerblatts kombiniert ist.

3. Blatt nach Anspruch 2, wobei der Transportkanal (42; 42') im Inneren eines Profilblechs umgesetzt ist, das das aerodynamische Leitblech (41) bildet.

4. Blatt nach Anspruch 2, wobei der Transportkanal (42a, 42b) eine Erweiterung des aerodynamischen Leitblechs (41) bildet.

5. Blatt nach einem der Ansprüche 1 bis 4, wobei die Mittel zum Verschließen durch einen Stopfen (63) gebildet sind, der fähig ist, in das Innere des Flüssigkeitstransportkanals (42') eingeführt zu werden.

6. Blatt nach einem der Ansprüche 1 bis 4, wobei die Mittel zum Verschließen durch Mittel zum Zusammendrücken des Flüssigkeitstransportkanals gebildet sind.

7. Blatt nach Anspruch 6, wobei die Mittel zum Zusammendrücken ein bewegliches Zusammendrückelement (621), das fähig ist, von einer offenen Position in eine Verschlussposition gebracht zu werden, und Rückhaltemittel (622), die fähig sind, das Zusammendrückelement (621) in der Verschlussposition festzuhalten, beinhalten.

8. Blatt nach Anspruch 6, wobei die Mittel zum Verschließen durch eine seitliche Einkerbung (61) gebildet sind, die im Inneren des Endstücks (60) bereitgestellt ist.

9. Blatt nach einem der Ansprüche 1 bis 8, das ein Übertragungsendstück (60'') beinhaltet, das an einem zweiten Ende der Struktur angeordnet ist und Mittel (65) zur Verbindung des Transportkanals mit einem zweiten Transportkanal umfasst.

10. Blatt nach einem der Ansprüche 1 bis 9, wobei die Mittel zur Zuführung durch ein Röhrchen (64) gebildet sind, das mit einem zweiten Flüssigkeitstransportkanal verbunden ist.

## Claims

1. Wiper for a glazed surface of a vehicle, comprising a structure intended to accept a wiper blade (30), and a liquid dispensing/spraying device comprising at least one liquid transport duct (42; 42'; 42a, 42b), the said wiper comprising at least one end fitting (60; 60') arranged at one end of the said structure and comprising means (61; 63; 621, 622) for closing off the said transport duct, **characterized in that** the said end fitting (60') further comprises means (64) for supplying the said liquid dispensing/spraying device with liquid.

2. Wiper according to Claim 1, in which the said transport duct (42; 42'; 42a, 42b) is combined with an aerodynamic deflector (41) of the said wiper.

3. Wiper according to Claim 2, in which the said transport duct (42; 42') is created inside a profile section that constitutes the said aerodynamic deflector (41).

4. Wiper according to Claim 2, in which the said transport duct (42a, 42b) constitutes an extension of the said aerodynamic deflector (41).

5. Wiper according to any one of Claims 1 to 4, in which the said closing-off means consist of a plug (63) which can be inserted into the said liquid transport duct (42').

6. Wiper according to any one of Claims 1 to 4, in which the said closing-off means consist of means for crushing the said liquid transport duct.

7. Wiper according to Claim 6, in which the said crushing means comprise a mobile crushing element (621) able to be brought from an open position into a closing-off position, and retaining means (622) able to immobilize the said crushing element (621) in the closing-off position.

8. Wiper according to Claim 6, in which the said crushing means consist of a lateral spline (61) formed on the inside of the said end fitting (60).

9. Wiper according to any one of Claims 1 to 8, comprising a transfer end fitting (60") positioned at a second end of the structure and comprising means (65) for connecting the said transport duct to a second transport duct.

10. Wiper according to any one of Claims 1 to 9, in which the said supply means consist of a nozzle fitting (64) connected to a second liquid transport duct.
